# EUROPÄISCHE PATENTSCHRIFT

(11) **EP 1 104 602 B1**
(45) Veröffentlichungstag und Bekanntmachung des Hinweises auf die Patenterteilung: **09.10.2002**
(21) Anmeldenummer: 99939933.0
(22) Anmeldetag: 23.06.1999
(51) Int. Cl.: H04B 10/08

(54) **OPTISCHES TEILNEHMERANSCHLUSSNETZ**
OPTICAL SUBSCRIBER ACCESS NETWORK
RESEAU OPTIQUE DE RACCORDEMENT D'ABONNE

(30) Priorität: 09.07.1998 DE 19830734
(43) Veröffentlichungstag der Anmeldung: 06.06.2001
(73) Patentinhaber: ROBERT BOSCH GMBH, 70442 Stuttgart (DE)
(72) Erfinder: SCHUNK, Nikolas, D-31139 Hildesheim (DE)
(74) Vertreter: Camp, Ronald
(86) Internationale Anmeldenummer: DE9901824
(87) Internationale Veröffentlichungsnummer: WO00003503

(56) Entgegenhaltungen:
- DE-A- 4 433 031
- US-A- 5 706 277
- PATENT ABSTRACTS OF JAPAN vol. 009, no. 023 (E-293), 30. Januar 1985 (1985-01-30) & JP 59 169238 A (MITSUBISHI DENKI KK), 25. September 1984 (1984-09-25)
- PATENT ABSTRACTS OF JAPAN vol. 1996, no. 12, 26. Dezember 1996 (1996-12-26) & JP 08 201223 A (SUMITOMO ELECTRIC IND LTD;NIPPON TELEGR & TELEPH CORP <NTT>), 9. August 1996 (1996-08-09)

## Beschreibung

### Stand der Technik

Die Erfindung geht aus von einer Gattung, wie sie im unabhängigen Patentanspruch 1 angegeben ist.

Ein Teilnehmeranschlußnetz dieser Art enthält eine sogenannte Endvermittlungsstelle, auch CO (central office) genannt. Darin sind die Ausgänge einer Vielzahl von Transceivern, die den einzelnen Teilnehmern zugeordnet sind und mit unterschiedlichen optischen Wellenlängen arbeiten, an die Eingänge eines Wellenlängenrouters angeschlossen. Dieser liefert am Ausgang ein Wellenlängenmultiplex, das dem Eingang einer Übertragungsleitung zugeführt wird. Der Ausgang der Übertragungsleitung ist an den Eingang eines in einem Kabelverzweiger angeordneten zweiten Wellenlängenrouters angeschlossen, der das übertragene Wellenlängenmultiplex wieder in die einzelnen Wellenlängen für die folgenden Teilnehmeranschlußleitungen zerlegt. Die Teilnehmeranschlußleitungen sind wieder an den einzelnen Teilnehmern zugeordnete Transceiver angeschlossen.

In der Praxis kann es vorkommen, daß die Übertragungsleitung durch mechanische, chemische, Feuchtigkeits-, Temperaturoder sonstige Einflüsse ausfällt oder zu stark gestört ist. Wegen der hohen über die Übertragungsleitung fließenden Datenrate für eine große Zahl von Teilnehmern muß dann unverzüglich automatisch Abhilfe geschaffen werden.

Zur Überwachung der Übertragungsleitung ist es bekannt, im Sinne einer Fernüberwachung in der Endvermittlungsstelle einen zusätzlichen Kontrolltransceiver vorzusehen, der ein Kontrollsignal mit einer sogenannten Kontrollwellenlänge über die Übertragungsleitung sendet. Das Kontrollsignal wird in dem Kabelverzweiger durch ein selektives Reflexionsmittel vollständig reflektiert und gelangt zu dem Kontrolltransceiver in der Endvermittlungsstelle zurück. Bei einem Ausfall oder einer Störung der Übertagungsleitung fehlt das reflektierte Kontrollsignal an dem Kontrolltransceiver oder hat eine erkennbar zu geringe Amplitude, was als Kriterium für einen Ausfall oder eine Störung der Übertragungsleitung und zur Einleitung einer Abhilfe dient.

Für die Abhilfe im Falle einer Störung ist es bekannt, in der Endvermittlungsstelle den Ausgang des Wellenlängenrouters und in dem Kabelverzweiger den Eingang des Wellenlängenrouters jeweils mit einem sogenannten DOS, einem digitalen optischen Schalter, auf eine gleichwertige, einwandfreie Ersatzleitung umzuschalten, so daß in dem Kabelverzweiger dem Wellenlängenrouter anstelle des Ausgangssignals der gestörten Übertragungsleitung nunmehr das Ausgangssignal der Ersatzleitung zugeführt wird.

Ein solcher Schalter, der auf eine Ersatzleitung umschaltet, wenn der Übertragungsverlust des Kontrollsignals einen Schwellenwert überschreitet, ist in Patent Abstracts of Japan, Vol. 09, No 23 (E-293), 15. Januar 1985, & JP-A-59169238 (MITSUBISHI) offenbart.

Derartige DOS sind aktive Bauteile, da die optische Umschaltung durch eine örtliche Erwärmung erfolgt und somit einen Heizstrom benötigt. Dadurch ergibt sich ein nennenswerter Aufwand für die DOS in dem Kabelverzweiger, zumal die DOS nur von der Endvermittlungsstelle ferngesteuert werden können.

Der Erfindung liegt die Aufgabe zugrunde, das Teilnehmeranschlußnetz so auszubilden, daß in dem Kabelverzweiger für die Umschaltung auf die Ersatzleitung im Störungsfall nur eine rein passive Netzstruktur erforderlich ist, die somit keinen Strom benötigt.

Diese Aufgabe wird durch die im Anspruch 1 angegebene Erfindung gelöst.

### Vorteile der Erfindung

Ein wesentlicher Vorteil der Erfindung besteht darin, daß für die Umschaltung auf die Ersatzleitung nur in der Endvermittlungsstelle aktive Bauteile wie ein gesteuerter digitaler optischer Schalter (DOS) benötigt werden, die Umschaltung auf die Ersatzleitung in dem Kabelvberzweiger jedoch rein passiv erfolgt und somit keinen Strom benötigt. Der rein passive Leistungsteiler zwischen den Ausgängen der Übertragungsleitung und der Ersatzleitung und dem Wellenlängenrouter in dem Kabelverzweiger übernimmt somit die Aufgabe des sonst an dieser Stelle benötigten aktiven DOS. Eine von der Endvermittlungsstelle gesteuerte Fernumschaltung im Kabelverzweiger wird also nicht mehr benötigt. Sender und Empfänger für die Kontrollwellenlänge befinden sich nur in der Endvermittlungsstelle.

Vorteilhafte Weiterbildungen der Erfindung sind in den abhängigen Ansprüchen angegeben.

### Zeichnungen

Mehrere Ausführungsbeispiele der Erfindung sind in den Zeichnungen dargestellt und in der folgenden Beschreibung näher erläutert. In der Zeichnung zeigen
Figur 1 ein Teilnehmeranschlußnetz gemäß der Erfindung mit Einspeisung der Kontrollwellenlänge in einen getrennten Eingang des Wellenlängenrouters in der Endvermittlungsstelle,
Figur 2 das Teilnehmeranschlußnetz gemäß Figur 1 mit Einspeisung der Kontrollwellenlänge in einen für den Datenverkehr benutzten Eingang des Wellenlängenrouters,
Figur 3 eine Weiterbildung von Figur 1 mit einem zusätzlichen Schalternetzwerk an der Ersatzleitung zur Realisierung weiterer Überwachungsfunktionen,
Figur 4 eine Weiterbildung des Teilnehmeranschlußnetzes von Figur 1 mit Einspeisung der Kontrollwellenlänge in den Ausgang des Wellenlängenrouters,
Figur 5 eine Abwandlung zur Überwachung des gesamten Netzwerks und
Figur 6 eine Weiterbildung für eine Überwachung der Temperatur in dem Kabelverzweiger.

In der Beschreibung und in der Zeichnung haben die verwendeten Symbole folgende Bedeutung:
- d: für "downstream" = in Teilnehmerrichtung
- DOS: für digitaler optischer Schalter
- m: Ordnungszahl des Wellenlängenrouters für einen be stimmten Wellenlängenbereich in Upstream-Richtung (u), außerhalb dieses Bereiches wiederholt sich die Eigenschaft des Wellenlängenrouters
- m + 1: Ordnungszahl des Wellenlängenrouters für einen be stimmten Wellenlängenbereich in Downstream-Richtung (d), außerhalb dieses Bereiches wiederholt sich die Eigenschaft des Wellenlängenrouters
- n: Index des jeweiligen Teilnehmers
- u: für "upstream" = in Richtung zur Endvermittlungsstelle
- λ: Wellenlänge des optischen Signals
- λ_{c}: Kontrollwellenlänge des Kontrollsignals

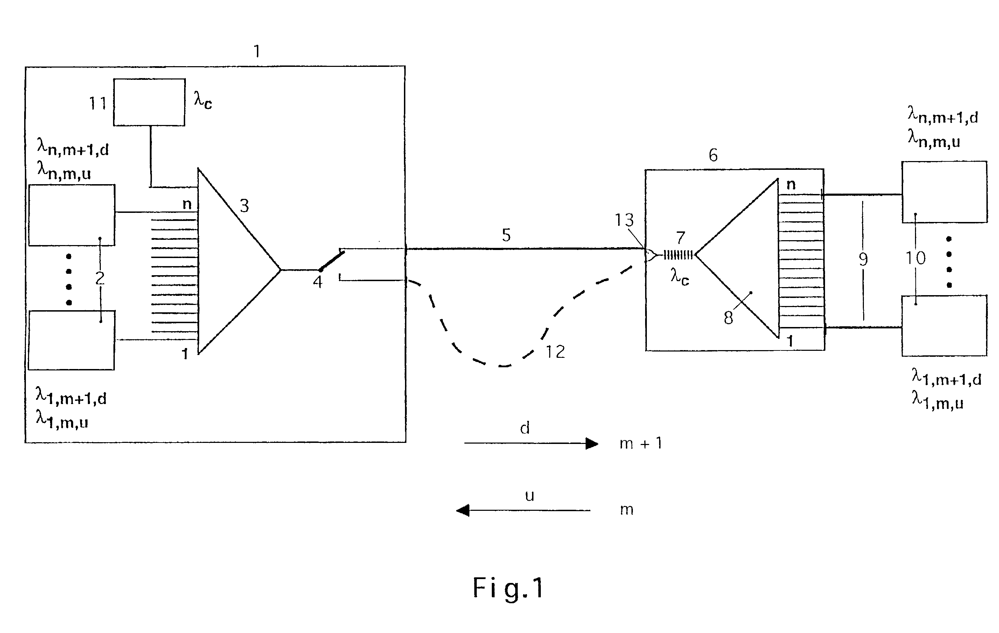

In Figur 1 enthält eine Endvermittlungsstelle 1 eine Vielzahl von Transceivern 2 mit der Ordnungszahl 1 bis n für die einzelnen Teilnehmer. Die Transceiver 2 sind an entsprechende Eingänge 1 bis n eines Wellenlängenrouters 3 angeschlossen, der über einen DOS 4, einen digitalen optischen Schalter, mit einer Übertragungsleitung 5 verbunden ist. Ein derartiger Schalter wirkt wie ein elektrischer Umschalter, jedoch für ein optisches Signal, und wird auch als "1x2 DOS" bezeichnet. Die Steuerung des Schalters, das heißt die Änderung der Lichtdurchlässigkeit zwischen praktisch vollständiger Durchlässigkeit und vollständiger Sperrung, erfolgt durch eine lokale Erwärmung. Der Ausgang der Übertragungsleitung 5 führt zu einem Kabelverzweiger 6 und ist darin über ein UV-induziertes Bragg-Gitter 7 mit einem Wellenlängenrouter 8 verbunden. Dessen Ausgänge 1 bis n sind über Teilnehmeranschlußleitungen 9 mit Transceivern 10 mit der Ordnungszahl 1 bis n verbunden. Die Endvermittlungsstelle 1 enthält außerdem einen Kontrolltransceiver 11 für ein Kontrollsignal mit der Kontrollwellenlänge λ_{c}, der an einen getrennten Eingang des Wellenlängenrouters 3 angeschlossen ist. Ein zweiter Ausgang des DOS 4 ist mit einer Ersatzleitung 12 verbunden, die ebenfalls zu dem Kabelverzweiger 6 führt. Der Anschluß der Übertragungsleitung 5 und der Ersatzleitung 12 an das UV-induzierte Bragg-Gitter 7 erfolgt über einen Leistungsteiler 13, der vorzugsweise als 3dB-Koppler oder sogenannter Y-Verzweiger ausgebildet ist. Ein derartiger Leistungskoppler führt mit einer Dämpfung von etwa 50% zwei Kanäle zu einem Kanal zusammen oder trennt einen ankommenden Kanal in zwei abgehende Kanäle auf.

Die Wirkungsweise der soweit beschriebenen Anordnung ist folgende: Die Transceiver 2 senden in der sogenannten Downstream-Richtung d, das ist in der Richtung von der Endvermittlungsstelle zum Teilnehmer, jeweils mit einer Wellenlänge λ₁ bis λₙ innerhalb des Bereiches mit der Ordnungszahl m+1 des Wellenlängenrouters, und in der sogenannten Upstream-Richtung u, das ist die Richtung vom Teilnehmer zur Endvermittlungsstelle, auf einer Wellenlänge λ₁ bis λₙ innerhalb des Bereiches mit der Ordnungszahl m des Wellenlängenrouters. Insgesamt gibt es also n Wellenlängen mit den Ordnungszahlen m+1 für die Richtung von der Endvermittlungsstelle zum Teilnehmer und n Wellenlängen mit den Ordnungszahlen m in entgegengesetzter Richtung. In dem Wellenlängenrouter 3 werden die n Wellenlängen zu einem Wellenlängenmultiplex zusammengefaßt, das dann über den DOS 4 und die Übertragungsleitung 5 zu dem Kabelverzweiger 6 übertragen wird. Der Wellenlängenrouter 8 in dem Kabelverzweiger 6 zerlegt das übertragene Wellenlängenmultiplex wieder in die einzelnen Wellenlängen 1 bis n auf Teilnehmeranschlußleitungen 9, die mit entsprechenden Transceivern 10 verbunden sind. Die Transceiver 10 empfangen also die Signale auf Wellenlängen mit den Ordnungszahlen m+1 und senden zur Endvermittlungsstelle 1 zurück jeweils auf Wellenlängen mit den Ordnungszahlen m.

Die Überwachung der Übertragungsleitung 5 geschieht folgendermaßen:
Der Transceiver 11 erzeugt ein Kontrollsignal mit der Kontrollwellenlänge λ_{c}, das einem gesonderten Eingang des Wellenlängenrouters 3 zugeführt und somit ebenfalls über die Übertragungsleitung 5 übertragen wird. Die Wellenlänge λ_{c} liegt zum Beispiel zwischen dem Wellenlängenbereich für die Übertragung in Teilnehmerrichtung (d) und dem Wellenbereich für die Übertragung in Richtung (u) zur Endvermittlungsstelle. Das Kontrollsignal wird an dem auf λ_{c} abgestimmten UVinduzierten Bragg-Gitter 7 in einem kleinen Intervall um λ_{c} herum vollständig reflektiert und gelangt in Upstream-Richtung (u) zu dem Transveiver 11 zurück, der somit als Sender und Empfänger für die Kontrollwellenlänge λ_{c} arbeitet. Wenn der Transceiver 11 die zurückkommende Kontrollwellenlänge λ_{c} mit ausreichender Amplitude registriert, ist dies ein Zeichen dafür, daß die Übertragungsleitung 5 einwandfrei ist, da nur das Gitter 7 eine Reflexion mit nahezu vollständiger Amplitude bewirken kann. Es werden dann keine Maßnahmen getroffen, und der DOS 4 bleibt in der dargestellten Stellung. Das reflektierte Kontrollsignal mit der Kontrollwellenlänge λ_{c} sowie auch die Nutzsignale gelangen über den Leistungsteiler 13 in Upstream-Richtung auch mit gleicher Amplitude auf die Ersatzleitung 12, werden jedoch aufgrund der gezeigten Stellung des DOS 4 in der Endvermittlungsstelle 1 nicht ausgewertet.

Wenn die Übertragungsleitung 5 unterbrochen oder zu stark gestört ist, kommt das Kontrollsignal mit der Kontrollwellenlänge λ_{c} nicht oder nicht mit ausreichender Amplitude zu dem Transceiver 11 zurück. Das ist ein Zeichen dafür, daß die Übertragungsleitung 5 ausgefallen oder gestört ist. Daher wird der DOS 4 in die untere Stellung umgelegt und das Wellenlängenmultiplex von dem Wellenlängenrouter 3 anstelle der Übertragungsleitung 5 nunmehr der Ersatzleitung 12 zugeführt. Über den Leistungsteiler 13 gelangt dieses Signal mit der gleichen Amplitude wie sonst über die Übertragungsleitung 5 nunmehr über das Gitter 7 auf den Wellenlängenrouter 8. Es ist ersichtlich, daß diese Umschaltung auf die Ersatzleitung 12 in der Endvermittlungsstelle 1 zwar den aktiven DOS 4 benötigt, in dem Kabelverzweiger 6 jedoch rein passiv erfolgt, also keinen Strom benötigt. Der Leistungsteiler 13 und das Gitter 7 sind rein passive Bauteile. Der Leistungsteiler 13 bewirkt zwar eine Dämpfung des Signals um etwa 50%. Dieser Nachteil ist jedoch gering gegenüber dem Vorteil der rein passiven Netzstruktur in dem Kabelverzweiger 6.

In der Praxis kann es vorkommen, daß bei einer Umschaltung von der Übertragungsleitung 5 auf die Ersatzleitung 12 im Störungsfall die - möglicherweise längere Zeit nicht benutzte - Ersatzleitung 12 ebenfalls gestört ist. Es ist daher vorteilhaft, auch die Funktionsfähigkeit der nicht benutzten Ersatzleitung ständig zu überprüfen. Das kann in einer vorteilhaften und einfachen Weise dadurch erfolgen, daß die Datenübertragung zyklisch zwischen der Übertragungsleitung 5 und der Ersatzleitung 12 umgeschaltet wird. Diese beiden Leitungen werden dann zeitlich abwechselnd für die Signalübertragung benutzt und somit auch ständig überwacht, ohne daß zusätzliche Mittel für eine ständige Überwachung der Ersatzleitung 12 notwendig sind. Die Umschaltung der Datenübertragung zwischen den beiden Leitungen erfolgt dabei vorzugsweise in Zeitabschnitten, in denen keine Datenübertragung erfolgt.

Der beschriebene 3dB-Koppler 13 und das UV-induzierte Bragg-Gitter 7 sind in der optischen Nachrichtentechnik allgemein bekannte Bauteile. Derartige 3dB-Koppler werden zum Beispiel geliefert von der Firma York, Diamand, Etek. UV-induzierte Bragg- oder Fasergitter werden unter anderem geliefert von den Firmen Advanced Fiber Optics, Tecos, 3M, Bragg Photonics und anderen.

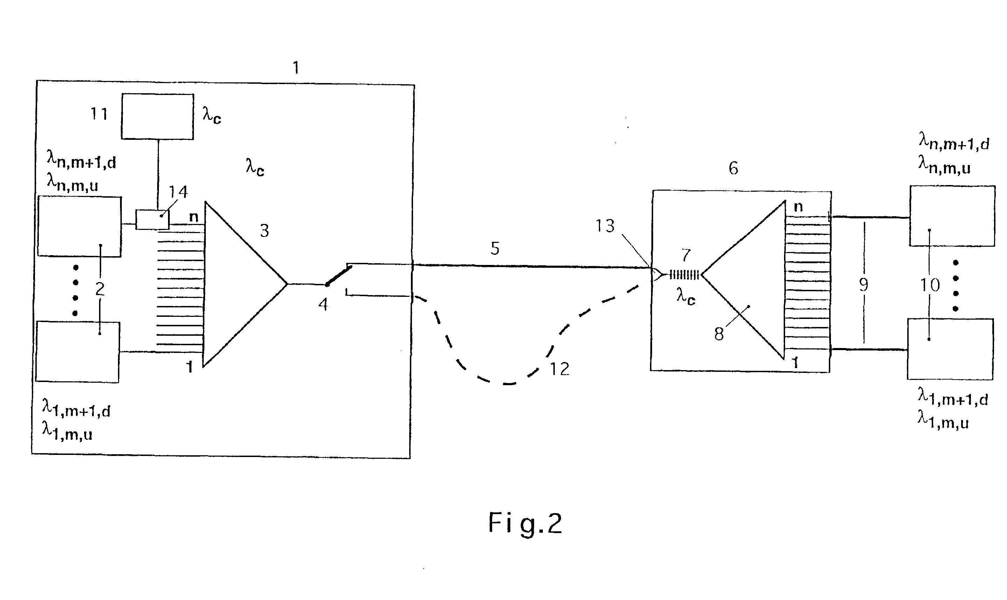

Figur 2 zeigt wieder die Anordnung gemäß Figur 1 mit folgender Abwandlung:
Der Transceiver 11 für die Kontrollwellenlänge λ_{c} ist nicht an einen gesonderten Eingang, sondern über ein Einkoppel/Auskoppel-Filter 14 an einen für ein Nutzsignal verwendeten Eingang des Wellenlängenrouters 3 angeschlossen.Um eine Störung zwischen der jeweiligen Wellenlänge λₙ und der Kontrollwellenlänge λ_{c} zu vermeiden, ist λ_{c} gleich einer in der Datenübertragung in beiden Richtungen nicht benutzten Wellenlänge. Die Kontrollwellenlänge λ_{c} kann zum Beispiel in dem Wellenlängenbereich mit der Ordnungszahl m+2 des Wellenlängenrouters benutzt werden.

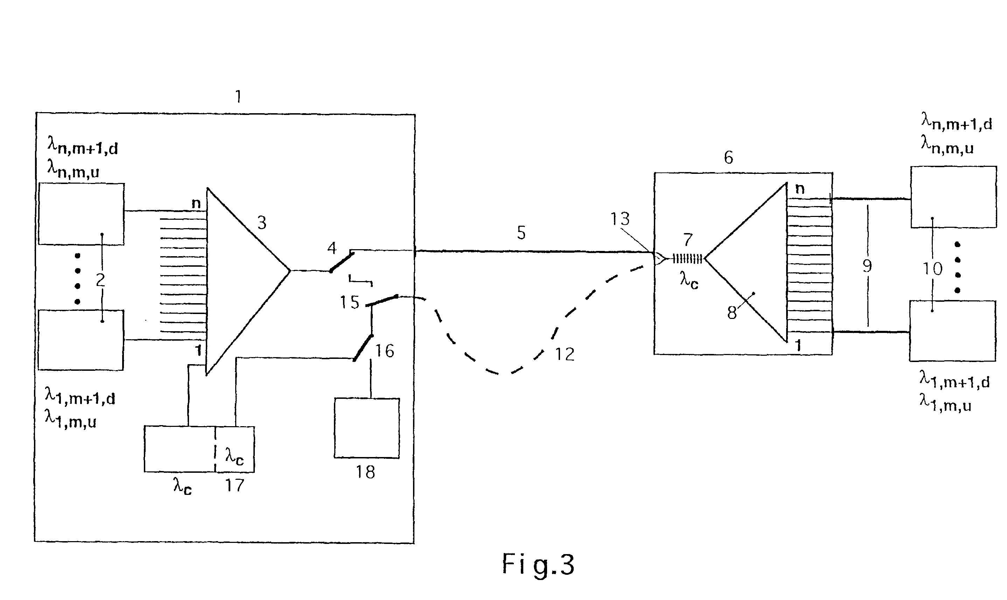

In Figur 3 sind zusätzlich zu dem DOS 4 zwei weitere DOS 15 und 16 am Eingang der Ersatzleitung 12 vorgesehen. Über den DOS 15 ist die Ersatzleitung 12, wenn sie nicht von dem DOS 4 gespeist wird, an einen weiteren Kontrolltransceiver 17 anschaltbar. Dann kann die Ersatzleitung 12 auch während der Zeiten überwacht werden, in denen sie für die Datenübertragung nicht benutzt wird. Die genannte zyklische Umschaltung zwischen der Übertragungsleitung 5 und der Ersatzleitung 12 für eine Überwachung der Ersatzleitung 12 ist dann nicht erforderlich. Mit dem DOS 16 ist die Ersatzleitung 12 auf ein optisches Zeitbereichsreflektometer 18 umschaltbar. Mit diesem als Meßinstrument wirkenden Reflektometer 18 kann die jeweilige Teilnehmeranschlußleitung überwacht werden. Bei Unterbrechung einer bestimmten Teilnehmeranschlußleitung kann die Bruch- oder Fehlerstelle ermittelt werden, ohne daß der Datenverkehr zu den anderen Teilnehmern abgeschaltet werden muß. Findet kein Datenverkehr statt, kann der Zustand des gesamten Netzwerkes ermittelt werden.

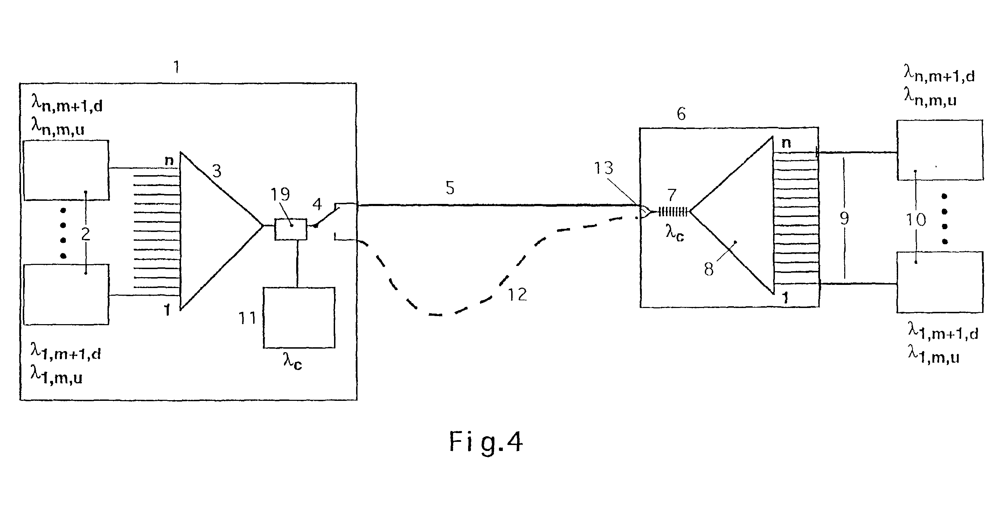

In Figur 4 ist der Kontrolltransceiver 11 nicht an einen Eingang, sondern über ein Einkoppel/Auskoppel-Filter 19 an den Ausgang des Wellenlängenrouters 3 angeschlossen. Der Vorteil besteht darin, daß die Einfügeverluste des Wellenlängenrouters 3 nicht in die Übertragung für die Kontrollwellenlänge λ_{c} eingehen und nur die Übertragungsleitung 5 alleine überwacht wird.

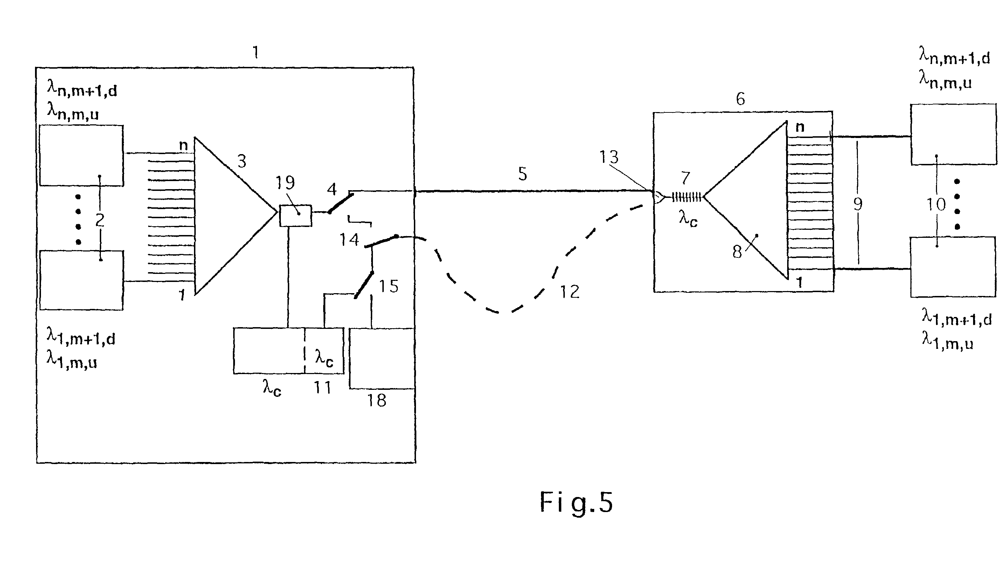

Figur 5 zeigt eine weitere Abwandlung, bei der der Transceiver 11 für die Kontrollwellenlänge λ_{c} wieder über das Einkoppel/Auskoppel-Filter 19 an den Ausgang des Wellenrouters 3 angeschlossen und außerdem die Ersatzleitung 12 über die DOS 14 und 15 auf den Transceiver 11 schaltbar ist. Mit dem DOS 15 ist wiederum wie in Figur 3 im Bedarfsfalle der Eingang der Ersatzleitung 12 auf das Zeitbereichsreflektometer 18 umschaltbar. Mit dieser Anordnung ist eine Überwachung des gesamten Netzwerkes mit dem optischen Zeitbereichsreflektometer 18 möglich.

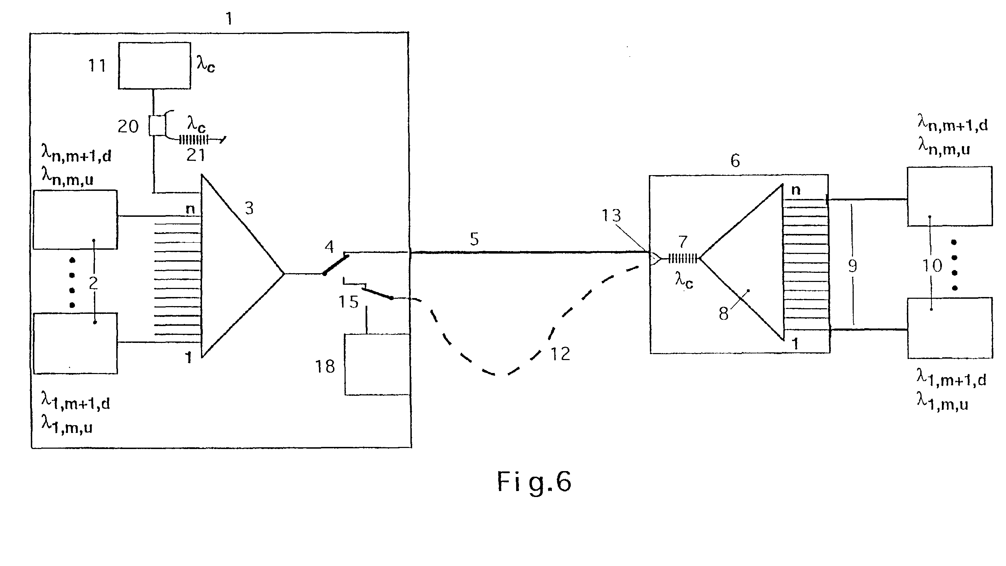

In Figur 6 liegt zwischen dem Kontrolltransceiver 11 und dem Wellenlängenrouter 3 noch ein Referenzkoppler 20 mit einem Referenz-Bragg-Gitter 21. Mit diesem Koppler 20 und dem Referenzgitter 21 wird ein Referenzsignal in den Weg des Kontrollsignals eingekoppelt. Durch Vergleich des Referenzsignals mit dem durch das UV-induzierte Gitter 7 reflektierten Kontrollsignal kann eine Anzeigegröße für eine Temperaturänderung im Kabelverzweiger 6 gewonnen werden. Bei Pulsmodulation der Sendequelle wird die Laufzeitdifferenz ausgenutzt, um das Differenzsignal mit dem reflektierten Impuls des Bragg-Gitters 7 im Kabelverzweiger 6 zu vergleichen. Die Änderung der Pegeldifferenz ist ein Maß für die Temperaturänderung im Kabelverzweiger 6, da angenommen werden kann, daß die Temperatur in der Endvermittlungsstelle 1 konstant ist. Das Koppelverhältnis im Koppler 20 und der Reflexionsfaktor des Referenzgitters 21 werden so gewählt, daß die Reflexionsverluste der Strecke und des Referenzsignals nicht nennenswert voneinander abweichen. Die Schaltung zur Erzeugung des Referenzsignals kann auch mit dem Transceiver 11 integriert werden.

## Patentansprüche

1. Optisches Teilnehmeranschlußnetz mit einer Endvermittlungsstelle (1), deren Ausgang über eine Übertragungsleitung (5) mit dem Eingang eines Kabelverzweigers (6) verbunden ist, wobei bei einem mit einer Kontrollwellenlänge (λ_{c}) detektierten Ausfall der Übertragungsleitung (5) der Ausgang der Endvermittlungsstelle (1) und der Eingang des Kabelverzweigers (6) auf eine Ersatzleitung (12) umschaltbar sind, **dadurch gekennzeichnet, daß** die Ausgänge der Übertragungsleitung (5) und der Ersatzleitung (12) über die Reihenschaltung eines passiven Leistungsteilers (13) und einer auf die Kontrollwellenlänge (λ_{c}) abgestimmten Reflexionseinheit (7) mit dem Kabelverzweiger (6) verbunden sind.

2. Teilnehmeranschlußnetz nach Anspruch 1,
**dadurch gekennzeichnet, daß** der Leistungsteiler (13) ein 3dB-Koppler ist.

3. Teilnehmeranschlußnetz nach Anspruch 1,
**dadurch gekennzeichnet, daß** die Reflexionseinheit ein UV-induziertes Bragg-Gitter (7) ist.

4. Teilnehmeranschlußnetz nach Anspruch 1,
**dadurch gekennzeichnet, daß** in der Endvermittlungsstelle (1) ein Kontrolltransceiver (11) für die Kontrollwellenlänge (λ_{c}) an einen Wellenlängenrouter (3) angeschlossen ist und die Kontrollwellenlänge (λ_{c}λ_{c}) gleich einer in der Datenübertragung in beiden Richtungen nicht benutzten Wellenlänge ist.

5. Teilnehmeranschlußnetz nach Anspruch 4,
**dadurch gekennzeichnet, daß** die nicht benutzte Wellenlänge zwischen dem Wellenlängenbereich für die Übertragung in Teilnehmerrichtung (d) und dem Wellenbereich für die Übertragung in Richtung (u) zur Endvermittlungsstelle (1) liegt.

6. Teilnehmeranschlußnetz nach Anspruch 4,
**dadurch gekennzeichnet, daß** der Kontrolltransceiver (11) über ein Einkoppel/Auskoppel-Filter (14) an einen für die Datenübertragung benutzten Eingang des Wellenlängenrouters (3) angeschlossen ist.

7. Teilnehmeranschlußnetz nach Anspruch 4,
**dadurch gekennzeichnet, daß** der Kontrolltransceiver (11) über ein Einkoppel/Auskoppel-Filter (19) an den Ausgang des Wellenlängenrouters (3) angeschlossen ist.

8. Teilnehmeranschlußnetz nach Anspruch 1,
**dadurch gekennzeichnet, daß** in der Endvermittlungsstelle (1) vor der Ersatzleitung (5) ein optisches Schalternetzwerk (15, 16) liegt, mit dem die Ersatzleitung (12) zur Überwachung durch die Kontrollwellenlänge (λ_{c}) an einen weiteren Kontrolltransceiver (17) oder an ein optisches Zeitbereichsreflektometer (18) anschaltbar ist.

9. Teilnehmeranschlußnetz nach Anspruch 1,
**dadurch gekennzeichnet, daß** zur Überwachung der Übertragungsleitung (5) und der Ersatzleitung (12) ein zyklisches Umschalten zwischen den beiden Leitungen in Zeitabschnitten ohne Datenübertragung erfolgt.

10. Teilnehmeranschlußnetz nach Anspruch 1,
**dadurch gekennzeichnet, daß** zur Ermittlung von im Kabelverzweiger (6) auftretenden Temperaturänderungen in der Endvermittlungsstelle (1) ein Referenzsignal in den Weg des Kontrollsignals eingekoppelt wird und durch Vergleich des Referenzsignals mit dem durch die Reflexionseinheit (7) reflektierten Kontrollsignal eine Anzeigegröße für die Temperaturänderung gewonnen wird.

## Claims

1. Optical subscriber access network with a terminating exchange (1) whose output is connected via a transmission line (5) to the input of a cable distributor (6), whereby in the event of a failure of the transmission line (5) detected with a monitor wavelength (λ_{c}), the output of the terminating exchange (1) and the input of the cable distributor (6) may be switched to a replacement line (12), **characterised in that** the outputs of the transmission line (5) and of the replacement line (12) are linked to the cable distributor (6) via the series connection of a passive power splitter (13) and of a reflection unit (7) tuned to the monitor wavelength (λ_{c}).

2. Subscriber access network according to Claim 1, **characterised in that** the power splitter (13) is a 3dB coupler.

3. Subscriber access network according to Claim 1, **characterised in that** the reflection unit is a UV-stimulated Bragg grating (7).

4. Subscriber access network according to Claim 1, **characterised in that** in the terminating exchange (1) a monitor transceiver (11) for the monitor wavelength (λ_{c}) is connected to a wavelength router (3) and the monitor wavelength (λ_{c}) is equal to a wavelength not used for data transmission in both directions.

5. Subscriber access network according to Claim 4, **characterised in that** the unused wavelength lies between the wavelength range for the transmission in the subscriber direction (d) and the wavelength range for the transmission in the direction (u) towards the terminating exchange (1).

6. Subscriber access network according to Claim 4, **characterised in that** the monitor transceiver (11) is connected via a launch/extract filter (14) to an input of the wavelength router (3) used for data transmission.

7. Subscriber access network according to Claim 4, **characterised in that** the monitor transceiver (11) is connected via a launch/extract filter (19) to the output of the wavelength router (3).

8. Subscriber access network according to Claim 1, **characterised in that** in the terminating exchange (1) is an optical switching network (15, 16) before the replacement line (5), with which the replacement line (12) may be connected, for monitoring through the monitor wavelength (λ_{c}), to a further monitor transceiver (17) or to an optical time-domain reflectometer (18).

9. Subscriber access network according to Claim 1, **characterised in that** for monitoring of the transmission line (5) and of the replacement line (12) cyclical switching takes place between the two lines in time intervals without data transmission.

10. Subscriber access network according to Claim 1, **characterised in that** for determining temperature changes occurring in the cable distributor (6), in the terminating exchange (1) a reference signal is launched into the path of the monitor signal and by comparison of the reference signal with the monitor signal reflected by the reflection unit (7), an indicator variable for the temperature change is obtained.

## Revendications

1. Réseau optique de raccordement d'abonnés avec un central téléphonique terminal (1) dont la sortie est connectée à travers une ligne de transmission (5) à une entrée d'un répartiteur de câbles (6), avec la possibilité en cas de panne de la ligne de transmission (5), détectée par une longueur d'onde de contrôle (λ_{c}), de commuter la sortie du central téléphonique terminal (1) et l'entrée du répartiteur de câbles (6) sur une ligne de remplacement (12), **caractérisé en ce que** les sorties de la ligne de transmission (5) et de la ligne de remplacement (12) sont connectées au répartiteur de câbles (6) à travers la connexion en série d'un diviseur de puissance passif (13) et d'une unité de réflexion (7) réglée sur la longueur d'onde de contrôle (λ_{c}).

2. Réseau de raccordement d'abonnés selon la revendication 1, **caractérisé en ce que** le diviseur de puissance (13) est un coupleur 3 dB.

3. Réseau de raccordement d'abonnés selon la revendication 1, **caractérisé en ce que** l'unité de réflexion est un réseau de Bragg (7) induit par UV.

4. Réseau de raccordement d'abonnés selon la revendication 1, **caractérisé en ce que** dans le central téléphonique terminal (1), un émetteur/récepteur de contrôle (11) est raccordé pour la longueur d'onde de contrôle (λ_{c}) à un routeur de longueur d'onde (3) et la longueur d'onde de contrôle (λ_{c}λ_{c}) est égale à une longueur d'onde non utilisée pour la transmission de données dans les deux sens.

5. Réseau de raccordement d'abonnés selon la revendication 4, **caractérisé en ce que** la longueur d'onde non utilisée se situe entre le domaine de longueurs d'onde pour la transmission dans la direction de l'abonné (d) et le domaine d'ondes pour la transmission dans la direction (u) vers le central téléphonique terminal (1).

6. Réseau de raccordement d'abonnés selon la revendication 4, **caractérisé en ce que** l'émetteur/récepteur de contrôle (11) est raccordé à travers un filtre de couplage/découplage (14) à une entrée du routeur de longueur d'onde (3) utilisée pour la transmission de données.

7. Réseau de raccordement d'abonnés selon la revendication 4, **caractérisé en ce que** l'émetteur/récepteur de contrôle (11) est raccordé à travers un filtre de couplage/découplage (19) à la sortie du routeur de longueur d'onde (3).

8. Réseau de raccordement d'abonnés selon la revendication 1, **caractérisé en ce que** dans le central téléphonique terminal (1), avant la ligne de remplacement (5), se trouve un réseau optique de commutation (15, 16) qui permet de connecter la ligne de remplacement (12) pour la surveillance par la longueur d'onde de contrôle (λ_{c}) à un autre émetteur/récepteur de contrôle (17) ou à un réflectomètre optique temporel (18).

9. Réseau de raccordement d'abonnés selon la revendication 1, **caractérisé en ce que** pour la surveillance de la ligne de transmission (5) et de la ligne de remplacement (12), une commutation cyclique a lieu entre les deux lignes dans des tranches de temps sans transmission de données.

10. Réseau de raccordement d'abonnés selon la revendication 1, **caractérisé en ce que** pour déterminer des variations de température survenant dans le répartiteur de câbles (6), dans le central téléphonique terminal (1), un signal de référence est injecté dans le chemin du signal de contrôle, et en comparant le signal de référence au signal de contrôle réfléchi par l'unité de réflexion (7), une grandeur indicative est obtenue pour la variation de température.
